# EUROPEAN PATENT APPLICATION

(11) **EP 4 775 376 A1**
(43) Date of publication of application: **15.07.2026**
(21) Application number: 25224455.3
(22) Date of filing: 17.12.2025
(51) Int. Cl.: B29C 48/08, B29C 48/00, B29C 48/69, C08J 5/18, C08J 11/06

(54) **A METHOD OF MANUFACTURING PET TAPE FROM A MATERIAL WITH THE ADDITION OF RECYCLED PET**

(30) Priority: 09.12.2024 PL 45064124
(71) Applicant: Ergis S.A., 00-349 Warszawa (PL)
(72) Inventor: Nowicki, Tadeusz, 00-349 Warszawa (PL); Lukomska, Agnieszka, 55-200 Olawa (PL)
(74) Representative: Radlowski, Jakub

(57) **Abstract**

A method of manufacturing PET tape from a material with the addition of recyclate (rPET) wherein the PET tape recyclate (up to 70 % w/w) is blended with PET raw material and the mixture is subjected to the solid state polycondensation at a temperature between 190 °C and 200 °C for 5-6 h under a pressure of 0-4 mbar until the minimum intrinsic viscosity of 0.63 dl/g is achieved. Subsequently, the raw material is heated to a temperature of 280-285 °C and is subjected to filtration on a screen with a pore size of 90-110 µm. The pressure upstream the screen is higher than the pressure downstream the screen by 30-40 bar, and the preferred pressure for rPET content between 40 % and 60 % w/w is 60-90 bar. The plasticized PET mixture, having a temperature of 280-285 °C, is extruded preferably through an extruding head with a temperature of 265-275 °C to form PET tape, and next the PET tape is cooled down to a temperature of 44-59 °C in a liquid having a temperature of 40-50 °C. Preferably, the tape is stretched on stretching godets with a draw ratio of 5.1-5.5.

## Description

The present invention relates to a method of manufacturing polyethylene terephthalate (PET) from a material containing recycled PET. Tapes of this type are primarily used as strapping tapes in packaging and for transport protection.

Many solutions are known in the art concerning methods of producing polyester materials and products thereof using recycled materials of the same type. In general, these methods consist of preparatory stages, usually involving cleaning, shredding or other types of preliminary processing of the recyclate, followed by mixing it with virgin raw material and manufacturing the end products. As a result, the product obtained usually has worse parameters than one made entirely from virgin raw material, because the polymer chains in recycled material are degraded and the structure of the material is non-uniform. In addition, the raw material contains impurities, which make the whole process more difficult. One of the commonly applied stages in the described methods is subjecting the recycled material to one of the phases of the solid state polycondensation process in an SSP reactor (Solid State Polycondensation), where, at an appropriate temperature and under reduced pressure, the viscosity of the material increases.

The international application published under number WO2023218054(A1) discloses a method for recycling polyester containers, in particular PET containers, comprising the following steps: (a) sorting the containers, (b) shredding the containers into flakes, (c) washing the flakes, (d) sorting the flakes, (e) extruding the flakes in the first melt filtration phase, (f) granulating the melt into pellets, (g) crystallising pellets and (h) subjecting pellets to the solid phase polycondensation (SSP). Between the process steps (e) and (f), liquid state polycondensation (LSP) is applied. In this solution, the intrinsic velocity (IV) in the liquid state polycondensation (LSP) phase increases to 0.95 dl/g, whereas in the solid state polycondensation (SSP) phase it further increases to 1.3 dl/g. In a preferred embodiment the LSP time was established at a level of 1 h, while the SSP time - 10 h or 14 h. In another preferred embodiment, the LSP stage is followed by additional filtration of the melt on a filter with a pore size of 50-150 µm. The capacity of SSP and LSP reactors is preferably set as 450-2500 kg/h each.

The description in the American patent US11059951(B2) presents a method for polycondensation of recycled PET, wherein first the mass of recycled PET substance is fed into a reaction chamber, and next heat is applied in order to reach a working temperature and maintain it for a treatment time. The PET mass is stirred in the reaction chamber during at least part of the process, which is carried out in vacuum. The heat application occurs by dielectric microwave heating of the mass of PET. Embodiments of this invention include carrying out the treatment in the liquid state of the material, at a temperature above the PET melting point, or in the solid state, at a temperature varying between the glass transition temperature and the PET melting temperature, preferably at a temperature as close as possible to the melting point. In another preferred embodiment, microwave heating has a frequency between 0.4 and 300 GHz, while the pressure in the reaction chamber varies from 1 to 700 mbar.

The American patent application US2023182365(A1) describes a method of manufacturing PET material suitable for use in the production with the blow method, utilizing PET recyclate derived from post-consumer waste. As in many other similar solutions, this method also involves first sorting waste materials, washing them and removing impurities (e.g. metal or paper). It is followed by drying and comminution of the PET material. Subsequently, the PET material is melted and admixtures are added (preferably in a proportion of 0.05-1.0 % by weight) to cause a reaction of extending or branching polymer chains, such as polyfunctional anhydride, tetracarboxylic dihydrides, pyromellitic dihydride; or consisting of bisoxazolines, bisepoxides, diisocyanates, polyepoxides, compounds containing several glycidyl groups, maleic anhydride, phthalic anhydride, triphenyl phosphates, lactamyl phosphorines, cyclophosphazene, polyacyl lactam, as well as bis-2-oxazoline, bis-5,6-dihydro-4h-1,3-oxazine, diisocyanates, trimethyl-1,2,4-benzenetricarboxylate (trimethyl trimellitate, TMT) or carbonyl-bis(1-caprolactam) or compounds having more than two hydroxyl groups, glycerol, pentaerythritol or a combination thereof. In the next stage, granulated PET is dried and shredded, and preferably before the drying stage the raw material can be filtered through a perforated filter with a pore size between 30 µm and 300 µm. Subsequently, the manufactured granulated product can be subjected to the solid state polycondensation (SSP) in order to increase the raw material viscosity; this process is preferably conducted at a temperature ≤225 °C and takes up to 20 hours. The viscosity can also increase as a result of reactive extrusion, which causes an increase in the PET material viscosity by 0.05-0.2 dl/g, while extrusion can occur in vacuum or in an inert gas atmosphere. Virgin PET material may also be added to the raw material in the proportion up to 50 % in order to improve the properties of the final material depending on the requirements related to the intended use of the raw material. This document declares the possibility of using up to 30 % to 100 % w/w of recycled material (rPET) with an intrinsic viscosity of 0.9-1.5 dl/g and a dynamic viscosity above 5500 Pa*s. On the one hand, this patent description contains specific technical information about the presented process (such as substances added to the recyclate to increase its viscosity), but sometimes it is very vague, for example with regard to the temperatures at which polycondensation is carried out or the duration of the process. In this respect, the solution does not contribute much to the art.

Some known solutions describe processes for obtaining pure PET raw material from 100 % recycled material, in many cases involving depolymerisation of the raw material at one of the preliminary stages, followed by its repolymerisation. A method like this was disclosed in the European patent application EP4421116(A1). In this case the method of manufacturing a polymeric material comprises the following steps: a) providing flakes of polyethylene terephtalate suitable for the glycolysis process, obtained by a pre-treatment process of dirty post-consumer plastic waste, in particular PET without distinction of colour and form; b) chemical depolymerisation reaction of the raw material by glycolysis to obtain a mixture of a glycolysis product based on the intermediate bis-2-hydroxyethyl terephthalate (BHET) and low-molecular-weight small oligomers; c) purification of the glycolysis product from step b) by using ion exchange resins and adsorbents to remove contaminants and colour, to obtain the pure BHET monomer. Additionally, a step of polycondensation of the pure BHET monomer from stage c) is envisaged, to obtain polyethylene terephthalate and crystallize it into the solid phase. In this way, a product with physico-chemical and mechanical properties analogous to those of the original raw material can be obtained.

In turn, American patent description US12109749(B2) discloses a process of producing biaxially oriented polyester film (BOPET) from recycled polyethylene terephthalate (rPET) granules. The process involves preparing granules from recycled PET (rPET) derived from post-consumer waste (PCR PET) by depolymerisation in a glycolysis process at a temperature of 245-255 °C and a pressure of 0.5-1 bar. Subsequently, monomer polycondensation is carried out in a reactor or an autoclave in order to obtain granulated PET. The granules are then fed into an extruder to obtain molten PET, which is extruded through a nozzle and then cooled on chilled rollers. Next, a biaxially oriented film (BOPET) is produced from 100 % recycled rPET. Biaxially oriented polyester film features a good elongation, good mechanical and/or thermal properties. The document declares that the quality of the film produced in this way is similar to that of a film made from virgin materials.

The technical problem, which is not solved in the above descriptions or other documents describing methods of processing rPET from consumer waste, concerns the development of a technology for processing PET tape recyclate, to obtain a product with physico-chemical parameters similar to those of a product made from virgin material, with a high content of recyclate. The PET tape is a product designed for bundling and strapping packages and cargo intended for transport, including expanding cargo. Applications of tapes like these include securing cargo on pallets, protecting furniture and other purposes requiring high flexibility and strength. Resistance to static and dynamic tensile stresses and external conditions (temperature, humidity) is particularly important. During the tests, the effect of individual process parameters on the properties of the PET tape was examined. These process parameters included the temperature in the SSP reactor; polycondensation time; the maximum acceptable amount of PET recyclate in the batch allowing a product with the assumed parameters to be produced; the temperature of the raw material in the filtration section; the speed of the blades in the filtration section; the effect of the differential pressure upstream and downstream the raw material filter; the effect of the temperature of the plastic melt in the extruder; the properties of the filtration screen and orientation on the stretching godets, the tape draw ratio, etc. This concerned in particular their impact on the tensile strength, number of breaks, longitudinal fracture and the viscosity of the material and end product.

The PET tape strength is obtained, *inter alia,* as a result of its orientation between the stretching godets in the stretching oven. The tape draw ratio (tension) determines the level of tape orientation depending on the material properties, in particular its viscosity. For a material with a low IV viscosity coefficient [dl/g], such as a material processed many times (e.g. recycled PET tape), it is necessary to apply a high tension to achieve the minimum required tape strength. At the same time, excessive orientation of degraded polymer chains leads to a lower transverse strength of the tape, which manifests itself in an increased tendency of the tape to longitudinal cracking.

The technology developed on the basis of the tests, which is the subject of the invention, allows the desired result to be achieved without the need for complex and energy-consuming processes (including the depolymerisation stage). The method does not require the use of reagents and chemicals to catalyse the repolymerisation reaction in order to restore the degraded PET material to its original form and to enable a high content of rPET recyclate to be applied in the PET tape production process. A similar result has been achieved due to the selection of properly configured production process parameters.

The essence of the method of manufacturing PET tape according to the invention comprises the steps and conditions of manufacturing PET tape from a material with a high percentage of recycled PET tape (rPET) as described below.

The PET tape recyclate is subjected to preliminary cleaning using commonly available and well-known cleaning and segregation methods (e.g. rinsing, magnetic separation, eddy current separation, cyclone separators, etc.), and is subsequently processed into a form in which it can be directly fed into the production line. The pre-cleaned and shredded rPET obtained in this way is mixed with clean PET flakes from virgin raw material or, for example, from PET bottles. The content of PET tape recyclate is up to 70 % w/w, preferably 40-60 % w/w in the batch. The mixture of PET flakes and rPET tape recyclate prepared in this way is then subjected to homogenization by pre-heating and stirring the raw material.

In the next stage of the process, the mixture is fed into a solid state polycondensation (SSP) reactor, where the polycondensation process occurs under vacuum or reduced pressure conditions (i.e. 0-4 mbar) and at a set temperature of 190-200 °C, to increase the intrinsic viscosity of the material. This process is carried out for 5-6 hours, until the intrinsic viscosity of at least 0.63 dl/g is achieved. For a person skilled in the art it will be clear that the longer the polycondensation reaction process lasts in the reactor, the more the intrinsic viscosity of the raw material will increase, however it is crucial to determine the optimum (i.e. the shortest possible) time, during which the repolymerisation coefficient reaches a level sufficient to obtain good strength parameters of the finished product in the form of PET tape. Extending the polycondensation reaction time will affect both the efficiency of the production process and its energy consumption. The set temperature in the SSP reactor should preferably be in the range of 198-200 °C and be as close as possible to the softening temperature of the PET raw material. This improves the efficiency of the polymer chain elongation process, thereby shortening the time required to carry out this phase of the described method. Any further increase in the temperature increases the energy consumption without visibly improving the viscosity parameters of the raw material.

After the SSP polycondensation phase, the PET material, which has an increased intrinsic viscosity coefficient, melts in the plasticising system under the influence of friction and a temperature of 280-285 °C, and then it goes to the filtration unit, which is a pressure chamber fitted with a filtration screen with a pore size of 90-110 µm. The pores in the filtration screen are cylindrical in shape, with the pore diameter at the screen inlet being larger than at the screen outlet. This is a characteristic feature resulting from the filtration screen production technology. The application of a filtration screen with a round filtration pore shape has a significant impact on the efficiency of the filtration process compared to filtration screens with a different filtration pore geometry, e.g. rectangular, where the diagonal of a pore is larger than its width and length, allowing some of impurities to pass through the filtration screen. From the perspective of the solution in question, the pore size is important due to the preferred filtration parameters, taking into account the intrinsic viscosity of the raw material at a temperature of 280-285 °C. An increase in the pore size would affect the quality of material downstream the screen; in this case more impurities could pass through the pores. As a result of the tests conducted, it was established that the optimum differential pressure on both sides of the filtration screen should be between 30 and 40 bar. Increasing the pressure above the upper limit of 40 bar leads to the same adverse effect as indicated above, which is passing impurities through the pores in the filtration screen, whereby in this case this occurs as a result of these impurities being pushed through the screen under conditions of increased differential pressure. The above effects are mutually correlated.

In addition, for excessive differential pressure between the filtration chamber and the sector downstream of the filtration screen, forcing the PET material through the screen pores results in reduction of its intrinsic viscosity, which affects the quality of the final product. Therefore, one of the essential features of the process is to ensure that the differential pressure across the filtration screen remains within the range of 30-40 bar. As impurities accumulate on the filtration screen, the screen's permeability decreases and the pressure increases. For this reason, the filtration unit is equipped with a rotary scraper, which is turned on when the pressure in the filtration chamber reaches a set value not exceeding 40 bar. The scraper sweeps off impurities from the screen by rotating preferably at a speed of 9-10 rpm. Depending on the amount of impurities, the scraper can either operate continuously, or periodically deactivate when the pressure in the filtration chamber drops.

Regardless of maintaining the above-specified differential pressure across the filtration screen, the pressure in the filtration chamber itself is preferably adjusted to the percentage of PET tape recyclate in the material processed. A higher proportion of rPET in the material justifies an increase in pressure in this chamber, and vice versa. In a preferred embodiment of the invention, the rPET content in the material processed is 40-60% w/w, and the pressure in the filtration chamber is 60-90 bar, while maintaining the differential pressure of 30-40 bar.

In another preferred embodiment, the material contains 20%-39% w/w of rPET, and the pressure in the filtration section upstream the screen stays within the range of 40-59 bar.

The filtered streams of the plasticised PET mixture at a temperature of 280-285 °C are further directed to the extrusion head, where PET tape with the desired dimensions is formed. Preferably, the extrusion head temperature should be 265-275 °C.

The formed PET tape should be cooled immediately after extrusion, so to this end the tape is transferred to a tank filled with a cooling liquid with a temperature of 40-50 °C. In the bath, the temperature of the tape is preferably lowered to 44-59 °C, so that the entire material solidifies to a degree preventing deformation.

In the next step, the PET tape is transported to a stretching oven, where the solidified tape is reheated to a temperature of 90-100 °C and stretched on stretching godets, which preferably may be in the form of rollers of the same diameter, rotating in the same direction, with the first roller rotating at a lower speed than the second one. The difference in the rotary speed determines the PET tape draw ratio. On the godets, the tape is preferably stretched so that the draw ratio amounts to 5.1-5.5

After the stretching step, the PET tape is preferably subjected to relaxation at a temperature of 65-95 °C. In the relaxation process, during which conditions are maintained to minimize longitudinal stresses (e.g. by freely suspending the tape while keeping relatively closely spaced support points), the PET tape preferably shrinks by 5.8-6.2 %

The product manufactured according to the present invention retains very good functional properties despite the use of a relatively high proportion of recycled rPET tape as a raw material, which may reach up to 70 %. The process parameters were selected on the basis of detailed studies during which different values of temperature, pressure, rPET content in the material, filtration screen pore size and other stages were applied. In many cases, the finished product did not have sufficient flexibility or the tape cracked lengthwise. On the other hand, in the case of insufficient repolymerisation of the material, the final product was more susceptible to tearing and the tape was damaged at lower tear strength coefficients. The desired performance parameters with a high rPET content could also be achieved by other means, in particular by adding a depolymerisation stage or by adding admixtures to the PET/rPET mixture to improve viscosity, as in some known methods. However, processes like these are more complicated, as they require additional production steps, an increased energy consumption or higher costs related to the requirement of using additional chemical substances, which also affects the subsequent recycling process of PET tapes of this type. Meanwhile, in the described method, the desired effect is achieved by the appropriate configuration of process parameters.

In an embodiment of the method according to the invention, 295 kg of pre-cleaned and shredded PET tape recyclate (rPET) is mixed with 196 kg of PET flakes obtained from the mechanical recycling of PET bottles (in 60:40 ratio). The rPET recyclate and the PET raw material with a particle size of 4-12 mm are heated to 188 °C in an EREMA KT1 industrial mixer with a capacity of 650 kg/h. The homogenisation takes 60-120 min. After the homogenisation step, the material is directed to a 5 m³ solid-state polycondensation (SSP) reactor, where the polycondensation process occurs at a pressure of 1.5 mbar and a set temperature of 200 °C and is carried out for 5 hours. After this time, the material acquires an intrinsic viscosity of 0.642 dl/g. The capacity of the polycondensation process is approximately 491 kg/h. The material is subsequently fed into the first extruder, where it is further heated to 283 °C and forced into the pressure chamber of the filtration module equipped with a filtration screen with a filtration area of 1342 cm³ and pore diameter of 90-110 µm. The filtration screen is circular in shape with a diameter of 356 mm. In the pressure chamber, the average pressure upstream the filtration screen is maintained at 85.5 bar, whereas downstream the filtration screen it is 50 bar. A rotary scraper, designed to clear impurities accumulating on the screen, operates at a speed of 9 rpm. The scraper is triangular in shape, with 9 cm long scraping blades attached parallel to its sides. Impurities together with a portion of the dissolved material, amounting to approximately 1.5 % of the mass of the filtered material, are removed by two screws discharging outside the chamber of the filtration unit. The filtration device is arranged so that the scraper actuator, connected to a pressure sensor, turns the scraper on when the pressure in the filtration chamber reaches 89 bar and turns it off when the pressure drops below 82 bar. These pressure parameters result from the relatively high 60 % share of rPET in the raw material. In the subsequent stage of the production process, the filtered, plasticized PET mass, having a temperature of 283 °C, is directed to an extrusion head maintained at 270 °C where, by means of rotary pumps, the material is extruded through die openings of 64 mm × 3.35 mm into the form of tapes, which solidify in a cooling bath in such a manner as to prevent deformation. The cooling bath, measuring 4.5 m x 0.65 m, is filled with a cooling liquid, having a temperature of 48 °C. The speed at which the tape goes through the water bath is controlled by the tape receiving shaft and is approximately 15.60 m/min, which allows the PET material from which the tape is made to cool down to a temperature of approximately 58 °C. Subsequently, the tape is transported to the stretching oven where, after reheating the tape with hot air and maintaining the set temperature of the stretching rolls, the PET polymer chains undergo the orientation process. The stretching godets have the form of three concurrently rotating rollers, one located immediately in front of the oven and two inside the stretching oven where the first roller rotates at a speed of 17.1 m/min and has a temperature of 90 °C, the second one rotates at a speed of 73.0 m/min and has a temperature of 105 °C, and the third one rotates at a speed of 82.6 m/min and has a temperature of 104 °C. The sum of the draw ratios resulting from the difference in speed between the individual stretching rolls, amounting to 1.09, 4.27 and 1.13 respectively, gives a total tape draw ratio of 5.3. After the stretching step, the PET tape is subjected to a relaxation process of the internal stresses built up in the material during the orientation process. The relaxation process occurs at a temperature of 95 °C with a relaxation coefficient of 5.97 %, which is the percentage difference between the speed of the stretching roll, rotating at 82.6 m/min, and the relaxation roll located further away, rotating at 77.7 m/min. Finally, the cooled PET tape, being the finished product with dimensions: width 15.5 mm, thickness 0.78 mm, embossing 15 % is wound onto a cardboard core and packed on a wooden pallet.

The method according to the invention can be used in the industrial or semi-industrial production of PET tape for protecting or securing cargo, packaging goods etc., in particular for typical tapes used on the market, such as 12 x 0.6 mm, 15 x 0.9 mm or others.

## Claims

1. A method of manufacturing PET tape from material with the addition of recycled material (rPET) in which up 70 % w/w of pre-cleaned and shredded recycled PET tape is combined with PET raw material, homogenised by preheating and mixing, and then, the mixture is subjected to the solid-state polycondensation (SSP) process after which the PET material of increased intrinsic viscosity is plasticised in an extruder, purified in a filtration unit and extruded through an extruder head into the form of tape, which, after orientation and relaxation, takes the form of the finished product wherein the polycondensation is carried out at a set temperature of 190-200 °C for 5-6 hours under a pressure of 0-4 mbar until an intrinsic viscosity of at least 0.63 dl/g is obtained, then the raw material is heated to a temperature of 280-285 °C and filtered on a filtration screen with a pore size of 90-110 µm, with the pressure upstream the filtration screen being greater by 30-40 bar than the pressure downstream the filtration screen.

2. A method of manufacturing PET tape according to claim 1 wherein the content of PET tape recyclate in the mixture is 40-60 % w/w, and the pressure in the filtration section upstream the filtration screen is maintained within the range of 60-90 bar.

3. A method of manufacturing PET tape according to claim 1 wherein the content of PET tape recyclate in the mixture is 20-39 % w/w, and the pressure in the filtration section upstream the filtration screen is maintained within the range of 40-59 bar.

4. A method of manufacturing PET tape according to any of the above claims wherein a scraper in the filtration section operates to sweep up impurities accumulating on the filtration screen, rotating at a speed of 9-10 rpm, and the scraper is turned on once the differential pressure across the filtration screen achieves more than 40 bar.

5. A method of manufacturing PET tape according to any of the above claims wherein streams of plasticized PET mixture, having a temperature of 280-285 °C, are extruded through an extrusion head, having a temperature of 265-275 °C, to form PET tape, and the tape formed in this way is cooled in a cooling liquid having a temperature of 40-50 °C.

6. A method of manufacturing PET tape according to one of the above claims wherein the PET tape cooled to a temperature of 44-59 °C is transported to a stretching oven where the solidified PET tape is heated to a temperature of 90-100 °C, and then, it is stretched on stretching godets with a draw ratio of 5.1-5.5.

7. A method of manufacturing PET tape according to claim 6 wherein after the stretching process, the PET tape is subjected to a relaxation process at a temperature of 65-95°C with a relaxation coefficient of 5.8-6.2%.
